# EUROPEAN PATENT APPLICATION

(11) **EP 1 046 577 A2**
(43) Date of publication of application: **25.10.2000**
(21) Application number: 00303316.4
(22) Date of filing: 19.04.2000
(51) Int. Cl.: B64D 27/02

(54) **Single engined aircraft**

(30) Priority: 19.04.1999 US 130400 P
(71) Applicant: Conway Holdings, Ltd., Centreville, Nassau, Bahamas (BS)
(72) Inventor: Watson, Lance, Wauchope N.S.W. 2446 (AU); Johnson, Billy, Deland, Florida 32724 (US)
(74) Representative: Flint, Adam

(57) **Abstract**

An aircraft (10) has a single engine (60) that is mounted in a nacelle (43). The nacelle (43) is mounted on a tail fin (42/44) of the aircraft (10) with its central longitudinal axis lying generally in the plane of a horizontal stabiliser (48) mounted on the tail fin (42/44).

## Description

The present invention relates to an aircraft.

Aircraft are built to meet the specific needs of their users. With technological improvements in aircraft structures and power plants, aircraft passenger and cargo transportation has grown tremendously. In an effort to maintain and control the cost of transportation via aircraft, many manufacturers have devoted time and energy to develop aircraft that are lightweight and fuel efficient and yet do not compromise safety.

Various aircraft structures and power plant configurations are known in the background art. One such configuration is disclosed in US-A-3666211 which discloses a trijet aircraft configuration, having a pair of wing mounted jet engines and an aft engine of the high-bypass turbofan type mounted in the vertical stabiliser of the tail section. US-A-3652035 discloses a twin boom lifting body fuselage aircraft with a twin tail assembly and a semicircular channel formed in the centre of the single horizontal stabiliser where a third engine is mounted. US-A-3807665 discloses a multi-engined aircraft with an even number of engines mounted symmetrically on the wings of the aircraft and one engine mounted on a tail fin of the aircraft with its propeller above the fuselage of the aircraft. US-A-3995794 discloses a super-short take off and landing aircraft provided with airfoils of the non-rotating type that are configured and arranged to provide greater lift while at the same time offering stable flight at ultra-low airspeeds with the use of two engines, side by side in a biplane configuration. US-A-4030688 discloses improvements to aircraft structures comprising a narrow delta platform fuselage with two small-span shoulder type wings in tandem and cascade utilising two engines above the fuselage. Additional background art which teaches aircraft structure and power plant configuration can be found in US-A-1745349 and US-A-3897030.

Aircraft passenger and cargo transportation is an established, effective means that will continue to be used extensively. The cost of manufacturing, maintaining and operating aircraft is one of the highest amongst all of the available forms of transportation. Manufacturers, operators and users desire to develop and utilise safe, reliable aircraft with the lowest possible manufacturing and operating costs. One of the most expensive components of an aircraft is the engine. The use of several engines increases the initial cost of the aircraft as well as the maintenance cost, thereby increasing the cost to the users.

According to a first aspect of the present invention, there is provided a single engine aircraft comprising a fuselage having a longitudinal axis, a single engine, wings mounted on the fuselage, a tail fin mounted on the fuselage, a horizontal stabiliser, and a propeller driven by the engine, wherein the single engine is mounted to said tail fin within a nacelle, the nacelle being located with its longitudinal axis substantially along an axis parallel to the longitudinal axis of the fuselage and passing through the horizontal fin and the vertical stabiliser, the propeller being mounted above the fuselage such that air is drawn by the propeller from forward to aft of the aircraft over the fuselage, the vertical stabiliser and the horizontal fin.

The propeller may be mounted forward of the nacelle. The propeller may be mounted aft of the nacelle. More than one propeller may be provided, optionally with one forward and one aft of the nacelle.

Preferably, the horizontal stabiliser is located at the upper half of the tail fin.

According to a second aspect of the present invention, there is provided a single engine aircraft comprising a fuselage, a wing attached to the fuselage, a vertical stabiliser attached to an aft portion of the fuselage, the vertical stabiliser including a fixed vertical fin and a movable rudder, a horizontal stabiliser attached to the vertical stabiliser, a single engine attached to said vertical stabiliser at a point at which the horizontal stabiliser connects to the vertical stabiliser, and a propeller attached to said engine at such a position that air approaching or exiting a circular area swept by said propeller is forced to pass over exterior surfaces of both said vertical stabiliser and said horizontal stabiliser.

According to a third aspect of the present invention, there is provided an aircraft comprising: a fuselage having forward and aft ends, said fuselage lying along a first elongate axis; first and second wing sections disposed symmetrically on opposite sides of said fuselage, said wing sections being free of any thrust-producing apparatus; and, a tail section connected to the aft section of said fuselage, said tail section including a vertical stabiliser, a horizontal stabiliser and means for producing thrust mounted forwardly of said vertical stabiliser for producing thrust in a direction substantially parallel to the first elongate axis and passing through both said vertical stabiliser and said horizontal stabiliser.

This invention is comprised generally of a single, fixed wing aircraft having a single engine, which is mounted to the vertical stabiliser of the tail section. The engine is preferably in a nacelle in the upper half of or at or near the top of the vertical stabiliser and the nacelle merges at its aft end into a horizontal stabiliser, which is also mounted at or near the top of the tail section.

By utilising a single engine, substantial cost, weight and fuel consumption savings are realised over prior aircraft. One such prior aircraft, shown in US-A-3807665 and sold as the Britten-Norman Trislander™, utilises an even number of symmetrically mounted wing engines and one engine on a tail fin. It has been found that the Trislander™ platform is particularly suitable, upon suitable structural modifications, as a single engine aircraft.

The engine may be of any known design as long as its power-to-weight ratio is sufficient. The engine has an elongate axis, and this axis is above the fuselage.

The mounting of a single central engine on the tail fin not only overcomes the disadvantages inherent in the mounting of an engine on the nose, but also produces other advantages. For example, in the preferred embodiment, the slipstream from or to the propeller flows directly over the control surfaces of the vertical and horizontal stabilisers, which greatly improves the low speed manoeuvrability and controllability of the aircraft when airborne and also its manoeuvrability and controllability when taxiing on the ground. Secondly, the engine, being clear of and above the fuselage, receives a smooth undisturbed airflow. Thirdly, the exhaust gasses from the engine may be discharged directly aft and this provides a small additional thrust.

Preferably, the engine is mounted in a nacelle which projects directly forwardly from a position at or near the top of the vertical stabiliser, and this nacelle merges at its aft end into the horizontal stabiliser, which is also mounted at or near the top of the tail section. With this arrangement, the slipstream behind the propeller flows uniformly over both the upper and lower surfaces of the horizontal stabiliser.

In order to compensate for the aft-favoured imbalance of weight occasioned by mounting only a single engine at the rear of the aircraft, two things can be done. First, the tail engine can be mounted as forwardly as feasible subject to structural mounting limitations, and secondly the fuselage can be extended forwards near the forward end of the aircraft. In this way, the yaw axis is maintained in the desired position relative to the wing.

Among the engines which are suitable for this application are the Pratt & Whitney PT-6, the Walter engine and the Garett (now Allied Signal) engine No. PTE-331-1O.

An embodiment of the present invention will now be described by way of example with reference to the accompanying drawings, in which;
Fig. 1 is a top plan view of an example of an aircraft according to the present invention;
Fig. 2 is a front elevational view of the example of Fig. 1;
Fig 3 is a left side elevational view of the example of Fig. 1, which is substantially a mirror image of the right side;
Fig. 4 is a perspective view of the example of Fig. 1; and,
Fig. 5 is an enlarged view of a portion of the tail region of the example of Fig. 1.

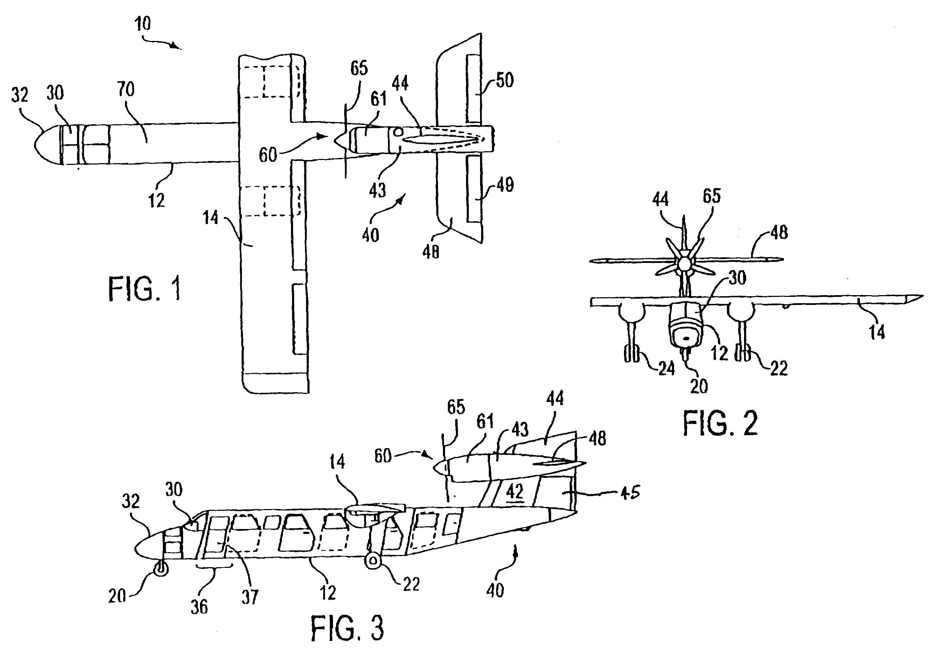

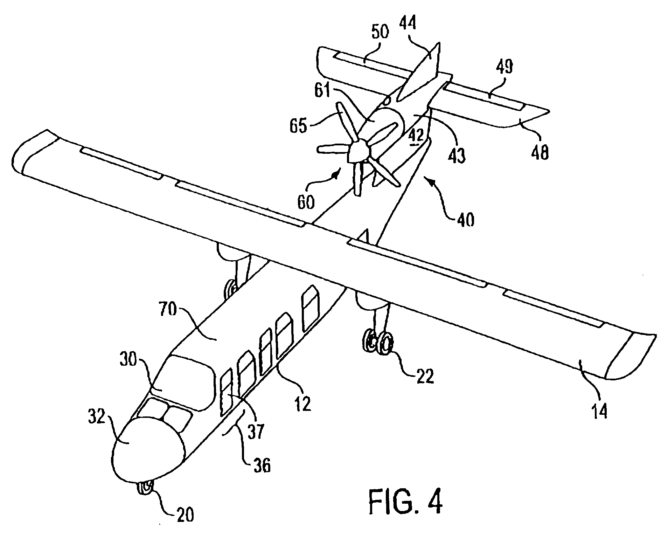

Figs. 1-5 show an example of the preferred embodiment of the present invention. An aircraft 10 has a fuselage 12, a single fixed wing 14, a forward landing gear 20, port and starboard side wing landing gear 22,24, and a tail section 40. Tail section 40 includes a tail fin or vertical stabiliser 42, an engine nacelle 43, an extension 44 of the vertical stabiliser 42 above the nacelle 43, a rudder 45, a horizontal stabiliser 48, which may include movable control surfaces such as ailerons 49,50 along the trailing edge thereof, and an engine 60 which turns a propeller 65. The nacelle 43 and horizontal stabiliser 48 are preferably mounted in the upper half of the vertical stabiliser 42,44. Aircraft 10 includes a cockpit 30 aft of nose 32.

The aircraft 10 is generally arranged symmetrically along its elongate axis 70.

As mentioned above, the utilisation of a single engine in the tail makes it preferable for the aircraft 10 to be relatively long forward of the wing 14. One way of accomplishing this in the case where the aircraft 10 is formed by modifying a three-engined aircraft such as the Trislander™ mentioned above is to add a plug 36 into fuselage 12 generally at or aft of cockpit 30. This adds weight and length overall to the aircraft 10 and advantageously affects the balance and aerodynamic performance of the aircraft 10.

It is to be noted that, instead of the "tractor" type of engine/propeller mounting shown in the drawings, a "pusher" type engine/propeller configuration may be utilised wherein the nacelle 43 and engine 60/propeller 65 extend rearwardly of vertical stabiliser 42. In this case, the same advantage is obtained because the pusher propeller accelerates the airstream in front of it and still brings about a uniform airflow over both the upper and lower surfaces of the horizontal stabiliser 48 and over the two side surfaces of the vertical stabiliser 42 to make the aircraft exceptionally manoeuvrable and controllable at low speed when airborne and also when taxiing on the ground.

It is estimated that the aircraft overall will weigh approximately 5,200 lbs (approx. 2350kg). The amount of weight reduction achieved by removing the two wing engines and the smaller tail mounted engine of the Trislander™ aircraft is approximately 1,000 lbs (approx. 450kg). Further, due to the improvements in engine efficiency, the rate of fuel consumption is reduced from 40-45 lbs (approx. 18-20 kg)per hour to 35-40 lbs (approx. 16 to 18 kg) per hour over the Trislander™ aircraft.

The absence of the two engines on the wings frees up a substantial additional volume for fuel storage. The Trislander™ aircraft could only hold 180 gallons (approx. 800 litres) of fuel, while the aircraft of the instant invention can hold up to about 298 gallons (approx. 1350 litres) of fuel.

Since the baggage compartment in the aircraft 10 is in nose 32, the distance of nose 32 to the centre of gravity (which is located at wing 14) of the aircraft 10 is important. By adding plug 36 to the fuselage, nose 32 is moved further from the centre of gravity. In order to limit the moment arm between nose 32, where baggage is located, and the centre of gravity, nose 32 is shortened somewhat compared to the Trislander™ aircraft. This also has the advantage of enhancing forward visibility for the flight crew. Another modification which has been made over the original Trislander™ is the deletion of the right front door and the addition of a pilot's door 37 on the left front of the fuselage 12.

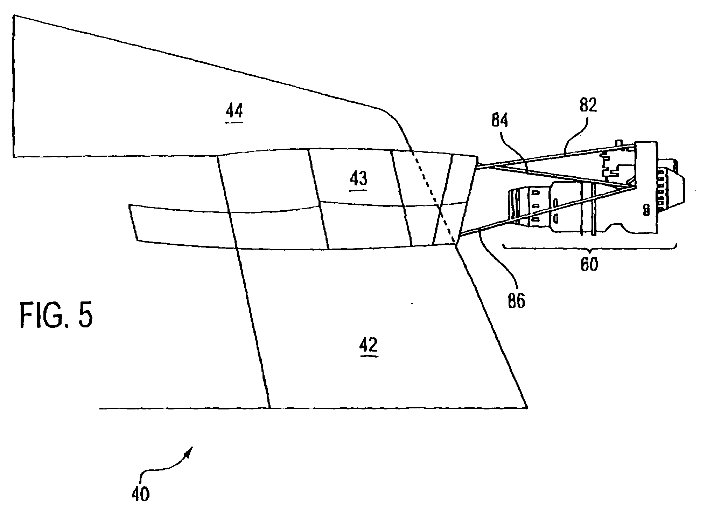

Fig. 5 shows a particular mounting configuration using the Garett TPE331-10 engine manufactured by Allied-Signal Aerospace Co. with the engine cowl 61 removed. The engine 60 can be mounted to the vertical stabiliser 42 using struts 82,84,86. However, any suitable means for mounting engine 60 to structural members of aircraft 10 are contemplated and are considered to be within the scope of this invention. In addition, the use of any suitable engine and engine type is considered to be within the scope of this invention. For example, the Walter M 601 E turboprop engine from Motorlet a.s. of Prague, Czech Republic may be used, as can the Pratt & Whitney PT-6 engine by Pratt & Whitney Canada.

There has been disclosed an aircraft which has a single engine that is mounted in a nacelle. The nacelle is mounted on a tail fin of the aircraft with its central longitudinal axis lying generally in the plane of a horizontal stabiliser mounted on the tail fin. This arrangement provides a number of advantages over prior art arrangements.

An embodiment of the present invention has been described with particular reference to the examples illustrated. However, it will be appreciated that variations and modifications may be made to the examples described within the scope of the present invention.

## Claims

1. A single engine aircraft comprising a fuselage having a longitudinal axis, a single engine, wings mounted on the fuselage, a tail fin mounted on the fuselage, a horizontal stabiliser, and a propeller driven by the engine, wherein the single engine is mounted to said tail fin within a nacelle, the nacelle being located with its longitudinal axis substantially along an axis parallel to the longitudinal axis of the fuselage and passing through the horizontal fin and the vertical stabiliser, the propeller being mounted above the fuselage such that air is drawn by the propeller from forward to aft of the aircraft over the fuselage, the vertical stabiliser and the horizontal fin.

2. An aircraft according to claim 1, wherein the propeller is mounted forward of the nacelle.

3. An aircraft according to claim 1, wherein the propeller is mounted aft of the nacelle.

4. An aircraft according to any of claims 1 to 3, wherein the horizontal stabiliser is located at the upper half of the tail fin.

5. A single engine aircraft comprising a fuselage, a wing attached to the fuselage, a vertical stabiliser attached to an aft portion of the fuselage, the vertical stabiliser including a fixed vertical fin and a movable rudder, a horizontal stabiliser attached to the vertical stabiliser, a single engine attached to said vertical stabiliser at a point at which the horizontal stabiliser connects to the vertical stabiliser, and a propeller attached to said engine at such a position that air approaching or exiting a circular area swept by said propeller is forced to pass over exterior surfaces of both said vertical stabiliser and said horizontal stabiliser.

6. An aircraft comprising:
a fuselage having forward and aft ends, said fuselage lying along a first elongate axis;
first and second wing sections disposed symmetrically on opposite sides of said fuselage, said wing sections being free of any thrust-producing apparatus; and,
a tail section connected to the aft section of said fuselage, said tail section including a vertical stabiliser, a horizontal stabiliser and means for producing thrust mounted forwardly of said vertical stabiliser for producing thrust in a direction substantially parallel to the first elongate axis and passing through both said vertical stabiliser and said horizontal stabiliser.
